# FASCICULE DE BREVET EUROPEEN

(11) **EP 4 433 760 B1**
(45) Date de publication et mention de la délivrance du brevet: **12.08.2026**
(21) Numéro de dépôt: 22818314.1
(22) Date de dépôt: 16.11.2022
(51) Int. Cl.: F25B 9/10, F25B 9/14, F25D 19/00, G01N 1/42

(54) **SYSTÈME DE RÉFRIGÉRATION ET PROCÉDÉ DE CHARGEMENT D'UN ÉCHANTILLON DANS UN TEL SYSTÈME DE RÉFRIGÉRATION**
KÜHLSYSTEM UND VERFAHREN ZUM LADEN EINER PROBE IN EINEM SOLCHEN KÜHLSYSTEM
REFRIGERATION SYSTEM AND METHOD FOR LOADING A SAMPLE INTO SUCH A REFRIGERATION SYSTEM

(30) Priorité: 19.11.2021 FR 2112254
(43) Date de publication de la demande: 25.09.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: GUIA, Olivier, 38360 Sassenage (FR); STORA, Marc, 38360 Sassenage (FR)
(74) Mandataire: Air Liquide
(86) Numéro de dépôt international: PCT/EP2022/082088
(87) Numéro de publication internationale: WO 2023/088941

(56) Documents cités:
- EP-A1- 3 742 076
- WO-A1-02/073100
- GB-A- 2 592 380
- US-A- 4 827 736

## Description

La présente invention concerne le domaine des systèmes de réfrigération cryogénique destinés à porter un échantillon à un température voisine ou inférieure au Kelvin.

### ARRIERE PLAN DE L'INVENTION

Il est connu un système de réfrigération qui comprend une unité de réfrigération comportant un premier écran thermique porté à une première température et qui définit une première enceinte thermique. Un deuxième écran thermique est situé à l'intérieur de la première enceinte et est porté à une deuxième température inférieure à la première température. Le refroidissement d'un échantillon se fait en plaçant ce dernier dans un volume dédié d'une canne de chargement. La canne est ensuite introduite dans l'unité de réfrigération afin d'être reliée thermiquement au deuxième écran.

Un tel système de réfrigération requiert de mettre à l'arrêt l'unité de réfrigération et de mettre sous pression (opération aussi appelée « casser le vide ») la première enceinte lorsque celle-ci est sous vide. La canne est ensuite introduite dans l'unité de réfrigération et mise en liaison thermique avec le deuxième écran avant que le système de réfrigération soit remis en route. Un tel procédé est long, couteux et énergivore. Il ne permet alors pas d'aisément et rapidement porter à basse température des échantillons à refroidir.

Une solution connue consiste à introduire une canne porte échantillon dans l'unité de réfrigération en assurant un pré-refroidissement sélectif au niveau d'écran(s) thermique(s). Les pré-refroidissements sont obtenus en manipulant en rotation la canne pour assurer ou non un contact avec les écrans (la canne a une géométrie adaptée). Lorsque l'échantillon est déposé dans son emplacement refroidi, il est séparé de la canne qui est retirée de l'unité. Cette configuration nécessite de prévoir des câblages et une structure à demeure dans l'unité de réfrigération.

Un autre système connu est décrit dans le document EP2313717A1. Selon ce principe, la canne de chargement porte des éléments mobiles qui permettent d'assurer ou non un échange thermique lors de l'introduction dans l'unité de réfrigération. La canne reste à demeure dans l'unité de réfrigération lors de son utilisation pour une mesure. Cette solution présente cependant un encombrement important qui limite le volume pour les échantillons.

D'autres techniques antérieures pertinentes sont divulguées dans les documents US4827736A, GB2592380A, EP3742076A1 et WO02/073100A1.

### OBJET DE L'INVENTION

L'invention a notamment pour but de faciliter le refroidissement d'échantillons à des températures cryogéniques.

### RESUME DE L'INVENTION

La présente invention est décrite dans les revendications indépendantes. D'autres modes de réalisation sont décrits dans les revendications dépendantes.

A cet effet, on prévoit, selon l'invention un système de réfrigération selon la revendication 1 comportant :
- une canne de chargement pourvue d'un emplacement ou volume de réception d'un échantillon à refroidir ; et
- une unité de réfrigération qui comprend un premier écran thermique qui définit au moins partiellement une première enceinte thermique et une platine située à l'intérieur de la première enceinte et qui est pourvue d'un organe de liaison thermique du volume de réception à la platine. Selon l'invention, le premier écran thermique comprend un premier orifice de passage de la canne au travers du premier écran thermique (permettant l'introduction ou le retrait de la canne), et l'unité de réfrigération comprend un premier organe de thermalisation agencé pour sélectivement mettre en liaison thermique ou non une première portion de la canne avec le premier écran thermique lorsqu'elle est introduite dans l'enceinte thermique.

Il est alors possible de charger un échantillon dans un tel système de réfrigération sans avoir besoin d'en interrompre le fonctionnement, les temps de mise en température des écrans thermiques sont alors réduits et le chargement d'échantillons est plus rapide et plus aisé.

Avantageusement, l'organe de thermalisation comprend au moins un élément de rappel en position agencé pour provoquer le passage de l'organe de thermalisation depuis un premier état dans lequel la première portion n'est pas en liaison thermique avec le premier écran vers un deuxième état dans lequel la première portion est en liaison thermique avec le premier écran.

Un fonctionnement particulièrement rapide est obtenu lorsque le système comprend un premier dispositif d'actionnement pour faire passer l'organe de thermalisation depuis son deuxième état vers son premier état.

On améliore la stabilité thermique et la consommation énergétique du système lorsque la première enceinte est étanche et sous vide et l'échantillon est chargé à travers un sas.

On améliore la consommation énergétique du système de réfrigération lorsqu'il comprend un volet d'obturation du premier orifice et qu'il est thermiquement relié au premier écran. Préférentiellement, le système comprend un deuxième dispositif d'actionnement pour sélectivement faire passer le volet entre une première configuration d'obturation du premier orifice et une deuxième configuration de libération du premier orifice.

On obtient une réalisation économique lorsque le premier dispositif d'actionnement et le deuxième dispositif d'actionnement comprennent une unité motrice commune et lorsqu'un organe de liaison de l'unité motrice au premier dispositif d'actionnement et au deuxième dispositif d'actionnement comprend un premier arbre monté à rotation relativement au premier écran. Préférentiellement alors, le deuxième dispositif d'actionnement comprend une liaison en rotation du volet au premier arbre.

Selon un mode de réalisation préféré, le premier organe de thermalisation comprenant un premier mors mobile et un deuxième mors fixe, le premier dispositif d'actionnement comprend un ensemble bielle/manivelle dans lequel la bielle comprend une première extrémité solidaire en rotation de l'arbre et une deuxième extrémité reliée par un premier pivot à une troisième extrémité de la manivelle, la quatrième extrémité de la manivelle étant articulée sur le mors mobile.

Avantageusement, le premier pivot comprend une lumière de réception d'un deuxième arbre, la lumière étant agencée de manière à ce qu'une rotation de la bielle ne soit transmise au deuxième arbre qu'après que la bielle ait effectué une première rotation d'une première amplitude non nulle et la première amplitude est telle que la première rotation provoque un passage du volet depuis sa première configuration vers sa deuxième configuration.

Avantageusement, la canne comprend un premier réseau de communication optique et/ou électrique et/ou fluidique relié à une interface de connexion solidaire de la canne. Le système de réfrigération trouve une application particulièrement intéressante lorsque l'unité de réfrigération est configurée de manière à ce qu'une première température du premier écran thermique soit inférieure ou égale à un Kelvin, et de manière à ce qu'une deuxième température de la platine soit inférieure ou égale à trois cents milliKelvins.

Une application performante est obtenue lorsque l'unité de réfrigération comprend également un premier écran thermique supplémentaire qui définit une deuxième enceinte thermique s'étendant autour de la première enceinte thermique, la deuxième enceinte thermique comprenant un deuxième orifice de passage de la canne au travers du premier écran thermique supplémentaire et un deuxième organe de thermalisation qui est agencé pour sélectivement mettre en liaison thermique la première portion et le premier écran thermique supplémentaire, un deuxième écran thermique supplémentaire qui définit une troisième enceinte thermique s'étendant autour de la deuxième enceinte thermique, la troisième enceinte thermique comprenant un troisième orifice de passage de la canne au travers du deuxième écran thermique supplémentaire et un troisième organe de thermalisation qui est agencé pour sélectivement mettre en liaison thermique la première portion et le deuxième écran thermique supplémentaire, un troisième écran thermique supplémentaire qui définit une quatrième enceinte thermique s'étendant autour de la troisième enceinte thermique, la quatrième enceinte thermique comprenant un quatrième orifice de passage de la canne au travers du troisième écran thermique supplémentaire.

La performance énergétique du système est encore améliorée lorsque le système comprend un sas de mise sous vide. Préférentiellement, le sas comprend une sortie reliée de manière étanche au troisième écran thermique supplémentaire (au dernier écran thermique extérieur).

On améliore encore la stabilité thermique et la consommation énergétique du système lorsque la quatrième enceinte est étanche et sous vide, les autres enceintes baignant dans la même atmosphère sous vide.

On améliore encore la consommation énergétique du système de réfrigération lorsque la canne comprend une deuxième portion apte à coopérer avec l'organe de thermalisation.

L'invention concerne également un procédé selon la revendication 19 de chargement d'un échantillon dans un système de réfrigération tel que défini ci-avant, le procédé comprenant les étapes suivantes, le système de réfrigération étant en fonctionnement :
- placer l'échantillon dans le volume de réception;
- déplacer la canne à travers le premier orifice de manière à amener la première portion de la canne en regard du premier organe de thermalisation,
- actionner le premier organe de thermalisation pour mettre en liaison thermique la première portion de la canne avec le premier écran thermique,
- lorsqu'une température de la première portion est sensiblement égale à une température du premier écran, actionner le premier organe de thermalisation pour supprimer une liaison thermique de la première portion avec le premier écran,
- déplacer la canne pour relier thermiquement la canne au deuxième écran.

Le procédé est encore plus performant lorsque, l'unité de réfrigération comprenant également :
- un premier écran thermique supplémentaire qui définit une deuxième enceinte thermique s'étendant autour de la première enceinte thermique, la deuxième enceinte thermique comprenant un deuxième orifice de passage de la canne au travers du premier écran thermique supplémentaire et un deuxième organe de thermalisation qui est agencé pour sélectivement mettre en liaison thermique la première portion et le premier écran thermique supplémentaire ;
- un deuxième écran thermique supplémentaire qui définit une troisième enceinte thermique s'étendant autour de la deuxième enceinte thermique, la troisième enceinte thermique comprenant un troisième orifice de passage de la canne au travers du deuxième écran thermique supplémentaire et un troisième organe de thermalisation qui est agencé pour sélectivement mettre en liaison thermique la première portion et le deuxième écran thermique supplémentaire ;
- un troisième écran thermique supplémentaire qui définit une quatrième enceinte thermique s'étendant autour de la troisième enceinte thermique, la quatrième enceinte thermique comprenant un quatrième orifice de passage de la canne au travers du troisième écran thermique supplémentaire, le procédé comprend les étapes supplémentaires de:
- déplacer la canne à travers le quatrième orifice et le troisième orifice de manière à amener la première portion de la canne en regard du troisième organe de thermalisation,
- actionner le troisième organe de thermalisation pour mettre en liaison thermique la première portion de la canne avec le deuxième écran thermique supplémentaire,
- lorsqu'une température de la première portion est sensiblement égale à une température du deuxième écran thermique supplémentaire, actionner le troisième organe de thermalisation pour supprimer une liaison thermique de la première portion avec le deuxième écran thermique supplémentaire ;
- déplacer la canne dans le deuxième orifice de manière à amener la première portion de la canne en regard du deuxième organe de thermalisation,
- actionner le deuxième organe de thermalisation pour mettre en liaison thermique la première portion de la canne avec le premier écran thermique supplémentaire,
- lorsqu'une température de la première portion est sensiblement égale à une température du premier écran thermique supplémentaire, actionner le deuxième organe de thermalisation pour supprimer une liaison thermique de la première portion avec le premier écran thermique supplémentaire.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] est une vue schématique en plan d'un premier mode de réalisation d'un système de réfrigération selon l'invention avec la canne de chargement introduite dans l'unité de réfrigération ;
[Fig. 2] est une vue schématique de détail en perspective d'une pince de thermalisation du système de réfrigération de la figure 1 ;
[Fig. 3] est une vue schématique de détail en perspective de la pince de la figure 2, d'une partie de son actionnement ainsi qu'un volet d'obturation;
[Fig. 4] est une vue schématique de détail en plan de l'actionnement de la pince de la figure 2 ;
[Fig. 5] est une vue schématique de détail en perspective du volet d'obturation de la figure 3 ;
[Fig. 6] est une vue schématique de détail en plan d'une deuxième configuration du volet d'obturation de la figure 3 et d'un premier état de la pince de la figure 2;
[Fig. 7] est une vue schématique de détail en plan d'une deuxième configuration du volet d'obturation de la figure 3 et d'un deuxième état de la pince de la figure 2;
[Fig. 8] est une vue schématique en plan d'une unité de réfrigération selon un deuxième mode de réalisation de l'invention avec la canne hors de l'unité de réfrigération;
[Fig. 9] est une vue schématique de détail en plan d'un deuxième mode de réalisation d'un système de réfrigération selon l'invention avec la canne dans de l'unité de réfrigération,
[Fig. 10] est une vue schématique et partielle en coupe verticale d'une unité de réfrigération selon un troisième mode de réalisation de l'invention avec la canne hors de l'unité de réfrigération,
[Fig. 11] est une vue schématique et partielle en coupe verticale de l'unité de réfrigération du troisième mode de réalisation de l'invention dans une première configuration d'introduction de la canne dans l'unité de réfrigération,
[Fig. 12] est une vue schématique et partielle en coupe verticale de l'unité de réfrigération du troisième mode de réalisation de l'invention dans une deuxième configuration d'introduction de la canne dans l'unité de réfrigération,
[Fig. 13] est une vue schématique et partielle en coupe verticale de l'unité de réfrigération du troisième mode de réalisation de l'invention dans une troisième configuration d'introduction de la canne dans l'unité de réfrigération

### DESCRIPTION DETAILLEE DE L'INVENTION

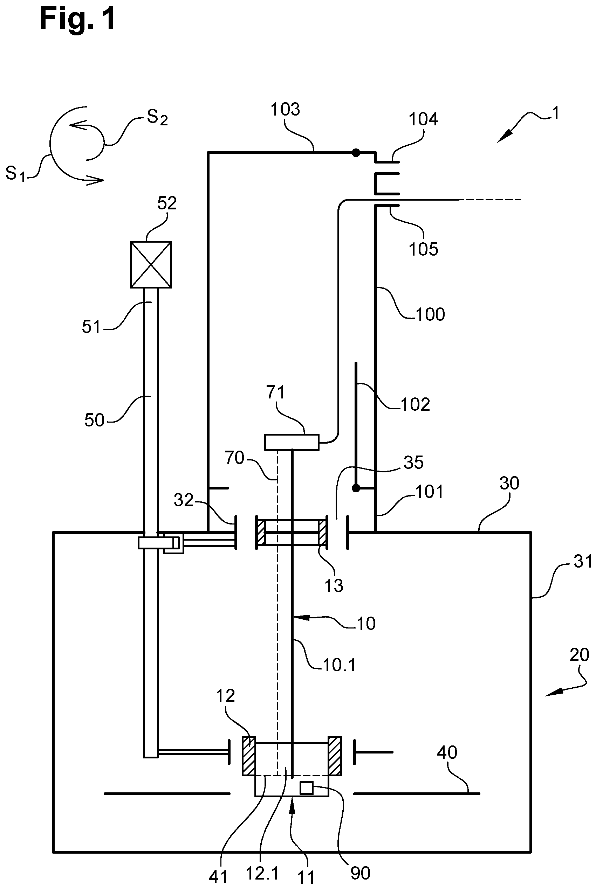

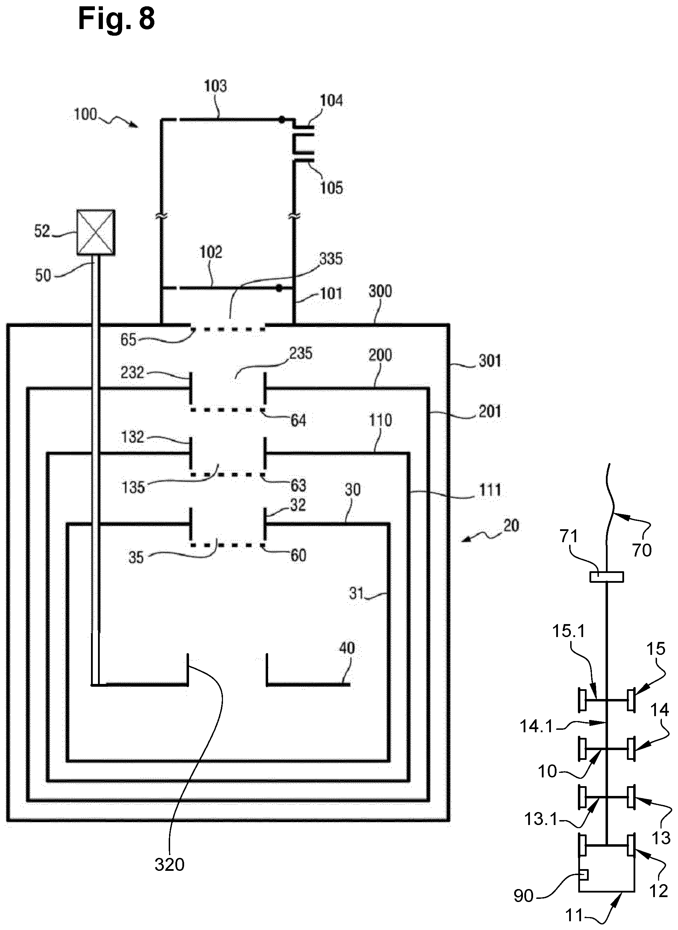

En référence à la figure 1, le système de réfrigération selon l'invention et généralement désigné 1, comporte une canne de chargement 10 comprenant un ensemble de paroi(s) définissant au moins un emplacement ou volume 11 de réception d'un échantillon 90 à refroidir. Le système 1 comporte également une unité de réfrigération 20 qui comprend un premier écran thermique 30 qui définit une première enceinte thermique 31, ici une enceinte 31 cylindrique. L'écran 30 est relié à ou contient un ou des systèmes de réfrigération cryogéniques connus et non représentés de l'unité 20, tels par exemple par un bain pompé d'Hélium, configurés pour maintenir l'enceinte 31 à une première température cryogénique, par exemple sensiblement égale à un Kelvin. L'unité 20 comprend également une platine 40 située à l'intérieur de l'enceinte 31 et reliée à un ou des autres systèmes de réfrigération cryogéniques sub-kelvin connus et non représenté de l'unité 20, comme par exemple un réfrigérateur à dilution, configurés pour maintenir la platine à une deuxième température inférieure à la première température, par exemple inférieure ou égale à trois cent milliKelvins, notamment comprise entre cinq et trois cents milliKelvins. Comme visible en figure 1, la platine 40 comprend un premier logement 41, par exemple concave, destiné à accueillir et le cas échéant venir en contact avec une première portion ou paroi 12 (par exemple cylindrique) conductrice de la canne 10 qui est thermiquement reliée par conduction à l'emplacement 11 de réception, par exemple via un premier voile plein 12.1. C'est-à-dire que, par exemple, la canne 10 porte à une extrémité une structure définissant un volume ou emplacement 11 (ouvert ou fermé) de support ou de réception d'au moins un échantillon 90 à refroidir. La canne 10 peut comprendre également, à une autre extrémité, une deuxième paroi ou portion 13 identique à la paroi 12 et qui est reliée à un corps 10.1 non conducteur thermique de la canne 10 (ou moins conducteur thermique). La paroi 12, 13 est par exemple reliée au corps 10.1 par un deuxième voile 13.1 plein (cf. [Fig. 8]).

On entend ici par voile plein, une paroi ou ensemble de paroi(s) permettant, par exemple, de réaliser une séparation étanche entre les milieux qui s'étendent sur ses deux faces opposées.

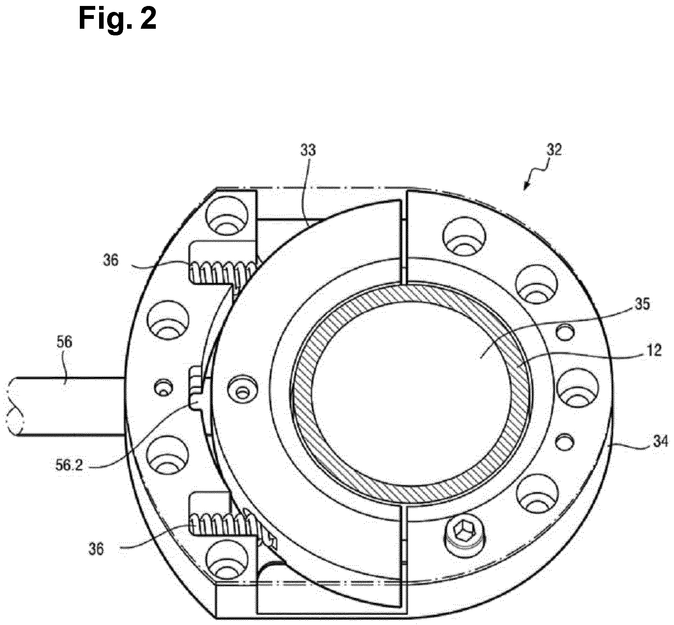

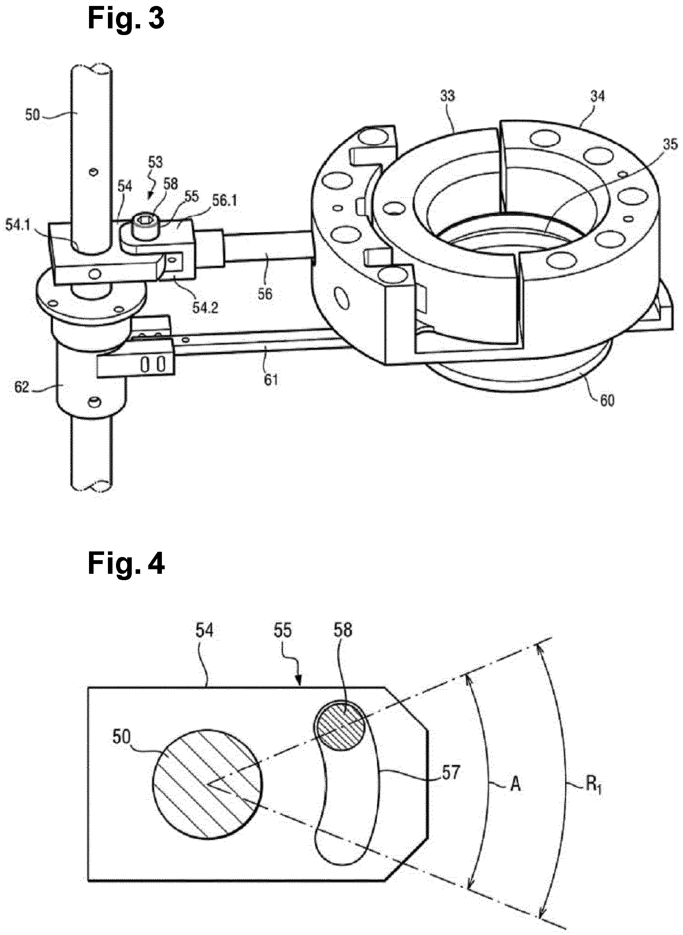

Par exemple, le corps de la canne 10 est composée (selon une direction longitudinale) de plusieurs portions empilées: des portions conductrices thermiques (portions ou parois 12, 13) (par exemple en cuivre éventuellement doré, laiton, ou aluminium) qui sont prévues pour être thermalisées (c'est-à-dire mises en froid comme décrit ci-dessus et ci-après) et une ou des portions 10.1 longitudinales moins conductrices thermiques entre ces portions conductrices (par exemple des portions isolantes peu ou pas conductrices thermiques composées par exemple de fibre de verre, carbone, titane,...). L'unité 20 comprend une première pince 32 de thermalisation montée sur l'écran 30 et thermiquement reliée à l'écran 30. Comme visible en figure 2, la pince 32 est mécaniquement solidaire de l'enceinte 31 et comprend un premier mors 33 mobile et un deuxième mors 34 de préférence fixe qui définissent un premier orifice 35 dans l'écran 30. Les deux mors forment un système de pince actionnable (ouverture/fermeture). Comme visible en figure 3, le mors 33 est par exemple relié à un premier arbre 50 monté à rotation relativement à l'écran 30. L'arbre 50 comprend une extrémité 51 située à l'extérieur de l'enceinte 31 et qui est reliée à un motoréducteur 52 électrique.

Le premier mors 33 est relié à l'arbre 50 par un mécanisme d'actionnement configuré pour permettre son déplacement entre au moins deux positions ou états. Le mécanisme d'actionnement comprend, par exemple un ensemble à bielle(s) et manivelle(s) 53. Dans cet exemple, la bielle 54 comprend une première extrémité 54.1 solidaire en rotation de l'arbre 50 et une deuxième extrémité 54.2 reliée par un premier pivot 55 à une troisième extrémité 56.1 de la manivelle 56. La quatrième extrémité 56.2 de la manivelle 56 est, quant à elle, articulée sur le mors 33. Comme visible en [Fig. 4], le pivot 55 comprend une lumière 57 de réception d'un deuxième arbre 58 de liaison de la bielle 54 à la manivelle 56. La lumière 57 est agencée de manière à ce qu'une rotation de la bielle 54 provoquée par la rotation de l'arbre 50 ne soit transmise à l'arbre 58 qu'après que la bielle 54 ait effectué une première rotation R1 de première amplitude A non nulle, ici sensiblement égale à quarante-cinq degrés. La pince 32 comprend également au moins un et de préférence deux ressorts 36 et 36 de compression qui exercent un effort tendant à rapprocher le premier mors 33 du deuxième mors 34. Le ou les ressorts sont agencés pour pousser le ou les mors 33, 34 transversalement vers l'orifice de passage pour assurer un contact thermique avec la portion 12 de la canne. La pince 32 peut donc adopter un premier état d'ouverture (ou état écarté) représenté en [Fig. 1] dans lequel la canne 10 n'est pas en liaison thermique avec l'écran 30 (les mors 33 et 34 ne sont pas en contact avec la paroi 12) vers un deuxième état de fermeture (ou rapproché) dans lequel la canne 10 est en liaison thermique avec l'écran 30 lorsque le mors 33 vient serrer la paroi 13 contre le mors 34 ([Fig. 2] et [Fig. 3]). L'ensemble bielle/manivelle 53 constitue un exemple d'un premier dispositif d'actionnement de la pince 32 qui permet, lorsqu'il est actionné par l'arbre 50, de sélectivement faire passer la pince 32 depuis son état de fermeture vers son état d'ouverture. Les ressorts 36 permettent de faire passer automatiquement la pince 32 depuis son état d'ouverture vers son état de fermeture lorsque l'actionneur ne commande pas l'écartement (ouverture). Bien entendu, il pourrait être envisagé que la position ou état de fermeture (serrage) pourrait être commandée également par l'actionneur.

Ainsi, le système de réfrigération comprend un mécanisme de serrage commandé (actionné) qui permet d'assurer ou non un lien thermique par contact (serrage) ou non (desserrage) autour de la canne 12. Le ou les organes de thermalisation (mors ou pinces ou autre) sont de préférences mobiles transversalement à la canne et peuvent être commandés pour enserrer cette dernière.

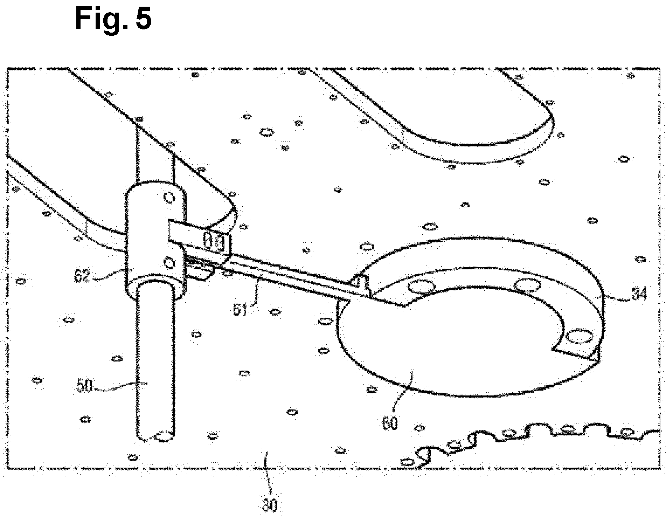

Comme visible aux figures 3 et 5, l'unité 20 comprend de préférence également un premier volet 60 mobile configuré pour permettre, selon sa position, l'obturation ou la non obturation de l'orifice 35. Le volet est également déplaçable par un organe d'actionnement.

Le volet 60 vient par exemple au contact du deuxième mors 34 lorsqu'il est dans sa première configuration d'obturation de l'orifice 35 et est alors thermiquement relié à l'écran 30. Le volet 60 peut être relié à l'aide d'un premier bras 61 à une première douille 62 solidaire en rotation de l'arbre 50.

Une rotation de l'arbre 50 permet donc de faire passer le volet 60 depuis sa configuration d'obturation de l'orifice 35 vers une deuxième configuration de libération (ou de non occultation) de l'orifice 35 et inversement. L'ensemble comprenant le bras 61 et la douille 62 constitue un deuxième dispositif d'actionnement du volet 60.

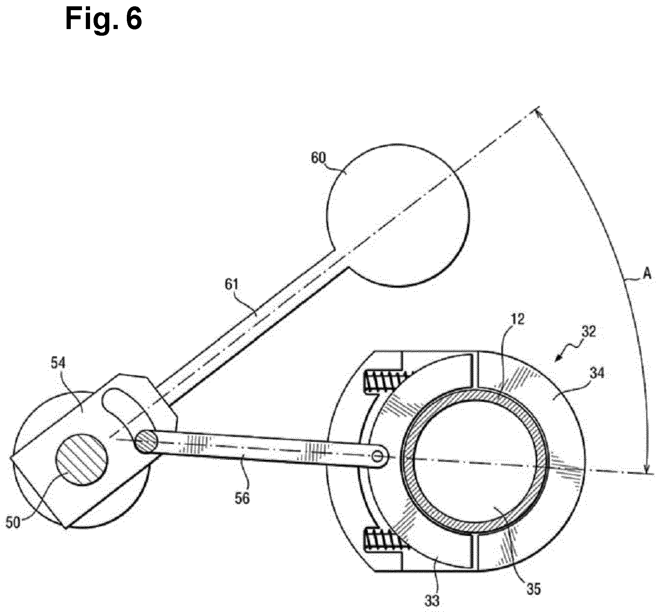

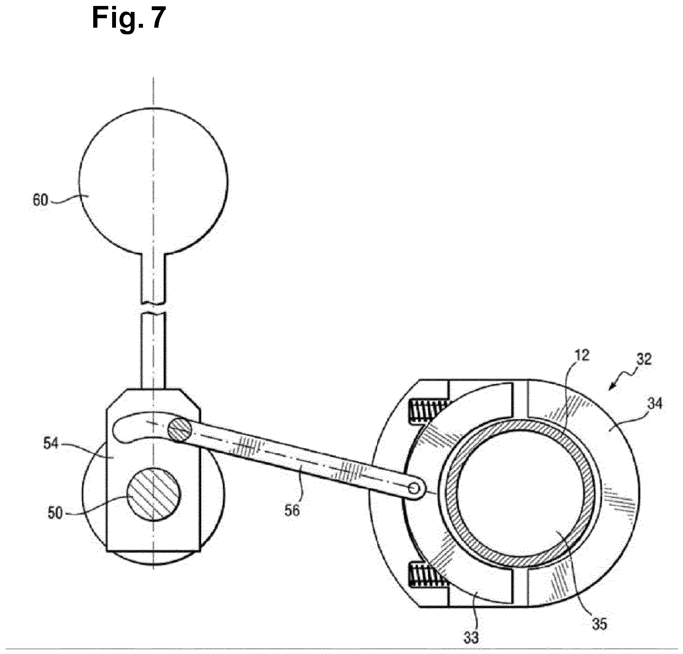

Comme visible en figures 6 et 7, l'amplitude A est telle que la rotation R1 de l'arbre 50 provoque un passage du volet 60 depuis sa configuration d'obturation de l'orifice 35 (figure 5) vers sa configuration de libération de l'orifice 35 (figure 6), sans toutefois que la pince 32 passe de son état de fermeture (figure 6) à son état d'ouverture (figure 7).

Le déplacement du volet 60 peut être couplé au déplacement de l'organe 32 de thermisation et/ou inversement (mouvement dépendant ou lié). La canne 10 de chargement est plus légère et sa manipulation plus aisée grâce à la configuration proposée pour les pinces 32. En effet, les organes 32 de thermalisation mobiles et leur actionneur sont montés dans l'unité de réfrigération.

Enfin, la canne 10 comprend ou porte de préférence un réseau 70 de communication optique, électrique et/ou fluidique reliés à une interface 71 de connexion solidaire de la canne 10.

De préférence, l'enceinte 31 peut être étanche et sous vide lorsque le système est en fonctionnement. De même, cette première enceinte 31 peut elle-même êtres logée dans une enceinte externe sous vide. Le système 1 peut alors comprendre un sas 100 de mise sous vide dont la sortie 101 comprend une porte 102 mobile ou amovible. La sortie 101 est reliée de manière étanche à l'écran 30 et fait face à l'orifice 35. Le sas 100 comprend, de manière connue, une porte d'entrée 103, un port 104 de mise sous vide/mise en pression et un port 105 de liaison de l'interface 71 vers l'extérieur du sas 100.

Il est possible d'amener un échantillon 90 à la température de la platine 40 sans devoir interrompre le fonctionnement du système de réfrigération 1 en suivant les étapes décrites ci-après.

Selon une première étape, on place l'échantillon 90 dans le volume 11 (emplacement de réception). Si la première enceinte 31 est sous-vide, on introduit la canne 10 dans le sas 100 et l'on procède à la mise sous vide du sas 100 (deuxième étape). Selon une troisième étape, le motoréducteur 52 est commandé de manière à ce que l'arbre 50 effectue une rotation d'amplitude déterminée, par exemple supérieure à quarante-cinq degrés (ici une amplitude de quatre-vingt-dix degrés) dans un premier sens S1. Une telle rotation de l'arbre 50 provoque le passage du volet 60 dans sa configuration de libération de l'orifice 35 et le passage de la pince 32 dans son état d'ouverture. Selon une quatrième étape, la porte 102 est ouverte et on déplace la canne 10 à travers l'orifice 35 jusqu'à ce que sa paroi 12 soit en regard des mors 33 et 34. Selon une cinquième étape, on commande une rotation déterminée, par exemple sensiblement égale à quarante-cinq degrés de l'arbre 50 dans un deuxième sens S2 opposé au sens S1 de manière à provoquer le passage de la pince 32 dans son état de fermeture, sans toutefois que le volet 60 passe dans sa configuration d'obturation. La paroi 12 est alors en liaison thermique (contact) avec l'écran 30 et cette liaison est maintenue jusqu'à ce que la température de la paroi 12 soit sensiblement égale à la température de l'écran 30, à savoir un Kelvin par exemple. Selon une sixième étape, on commande une rotation déterminée, par exemple de quarante-cinq degrés de l'arbre 50 dans le sens S1 de manière à provoquer le passage de la pince 32 dans son état d'ouverture, tout en maintenant le volet 60 dans sa configuration de libération. Ceci a pour effet de supprimer la liaison thermique (contact) de la paroi 12 avec le premier écran. Selon une septième étape, on déplace la canne 10 jusqu'à placer la paroi 12 dans le logement 41 et ainsi relier thermiquement la canne 10 à la platine 40. La platine 40 peut comporter également un système de pince 320 mobile (organe de thermalisation) pour mettre ou non en contact thermique la platine 40 avec la portion 12 liée thermiquement à l'emplacement 11 de réception de l'objet 90 à refroidir.

Avantageusement, on commande une rotation déterminée, par exemple sensiblement égale à quarante-cinq degrés de l'arbre 50 dans le sens S2 de manière à provoquer le passage de la pince 32 dans son état de fermeture, sans que le volet 60 passe dans sa configuration d'obturation (huitième étape). On relie alors thermiquement la paroi 13 avec l'écran 30 ce qui ralentit la perte par conduction de frigories depuis la platine 40 via la canne 10. Le deuxième voile 13.1 fait alors office d'obturateur de l'orifice 35 et contribue à isoler l'intérieur de l'enceinte 31 de l'extérieur de l'enceinte 31.

Le retrait de l'échantillon 90 de l'unité 20 se fait en effectuant les étapes ci-dessus dans le sens inverse.

Les éléments identiques ou analogues à ceux précédemment décrits porteront une référence numérique identique à celle-ci dans la description qui suit d'un deuxième mode de réalisation de l'invention.

Selon un deuxième mode de réalisation de l'invention représenté en figure 8, l'unité 20 comprend un premier écran thermique supplémentaire 110, thermalisé par exemple à quatre Kelvins par le deuxième étage d'un tube pulsé, et qui définit une deuxième enceinte thermique 111 s'étendant autour de l'enceinte 31. L'unité 20 comprend également un deuxième écran thermique supplémentaire 200, thermalisé par exemple à cinquante Kelvins par le premier étage d'un tube pulsé, et qui définit une troisième enceinte thermique 201 s'étendant autour de la deuxième enceinte thermique 111 ainsi qu'un troisième écran thermique supplémentaire 300, à la température ambiante (c'est à dire proche de trois-cent Kelvins) qui définit une quatrième enceinte thermique 301 s'étendant autour de la troisième enceinte thermique 201.

Les enceintes sont ainsi imbriquées les unes dans les autres à la manière de « poupées gigognes ».

L'enceinte 301 la plus extérieure est de préférence étanche et, en condition de fonctionnement, elle est sous vide à une pression inférieure ou égale à un dix-millième de millibar.

L'enceinte 111 comprend une deuxième organe ou pince de thermalisation 132, identique à la pince 32, et qui est thermiquement reliée à l'écran 110. La pince 132 définit un deuxième orifice 135 de passage de la canne 10.

L'enceinte 201 comprend une troisième pince de thermalisation 232, identique à la pince 32, et qui est thermiquement reliée à l'écran 200. La pince 232 définit un troisième orifice 235 de passage de la canne 10.

L'enceinte 301 comprend un quatrième orifice 335 de passage de la canne 10. Les pinces 132 et 232 sont actionnées par le motoréducteur 52 via l'arbre 50.

Les écrans 110 et 200 sont reliés à des refroidisseurs cryogéniques connus et non représentés de l'unité 20 pour être maintenus respectivement à des températures déterminées par exemple une troisième température sensiblement égale à quatre Kelvins, une quatrième température sensiblement égale à cinquante Kelvins. La température de l'écran 300 est la température ambiante, ici sensiblement égale à trois cent Kelvins.

L'unité 20 comprend également un deuxième volet 63 d'obturation de l'orifice 135, un troisième volet 64 d'obturation de l'orifice 235 et un quatrième volet 65 d'obturation de l'orifice 335. Les volets 63, 64 et 65 sont identiques au volet 60 et respectivement montés sur et thermiquement reliés aux écrans 110, 200 et 300. Les volets 63, 64 et 65 sont actionnés par le motoréducteur 52 via l'arbre 50.

La sortie 101 du sas 100 est, selon ce deuxième mode de réalisation, reliée de manière étanche à l'écran 300 pour faire face à l'orifice 335.

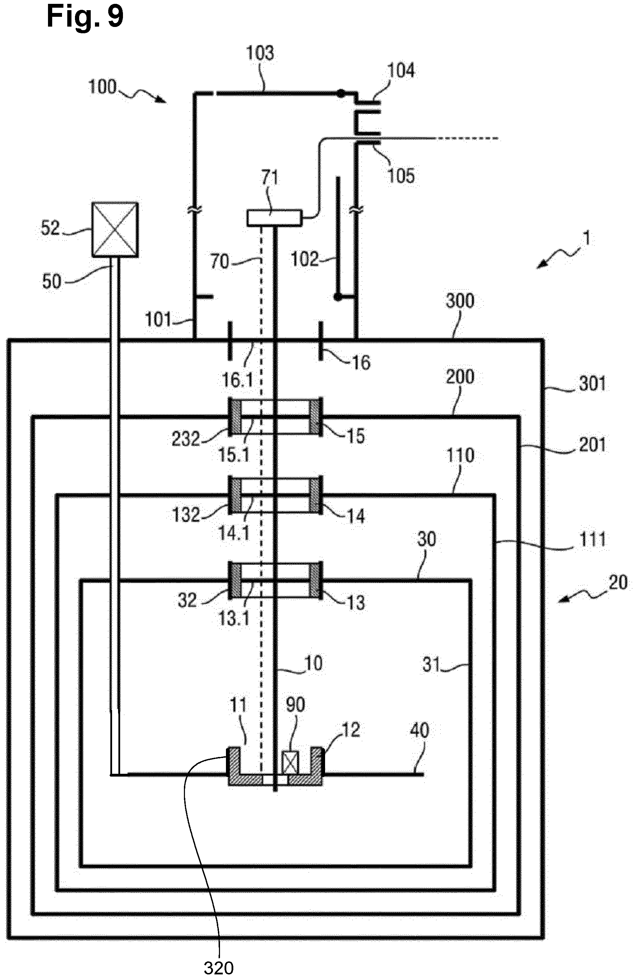

Comme visible en figure 9, la canne 10 comprend une première paroi 12, une deuxième paroi 13, une troisième paroi 14 et une quatrième paroi 15 et une cinquième paroi 16 qui sont respectivement reliées à la canne 10 par des portions ou voiles (par exemple les voiles 14.1, 15.1 et 16.1).

L'utilisation du système 1 se fait alors en mettant en œuvre les étapes supplémentaires suivantes, préalablement aux étapes trois à huit décrites plus haut en référence au premier mode de réalisation de l'invention.

A l'issue de la deuxième étape de mise sous-vide du sas 100, on déplace la canne 10 à travers les orifices 335 et 235 de manière à amener la paroi 12 en regard de la pince 232. On commande le motoréducteur 52 pour actionner la pince 232 et mettre en liaison thermique la paroi 12 avec l'écran 200. Ce faisant, on provoque également la liaison de la paroi 13 avec l'écran 300 et le voile 13.1 fait office d'obturateur de l'orifice 335. Lorsque la température de la paroi 12 est sensiblement égale à la température de l'écran 200 (ici cinquante kelvins), on commande le motoréducteur 52 pour actionner la pince 232 et supprimer la liaison thermique de la paroi 12 avec l'écran 200. Ce faisant, on supprime également la liaison de la paroi 13 avec l'écran 300. On déplace ensuite la canne 10 dans l'orifice 135 suivant de manière à amener la paroi 12 en regard de la pince 132. On commande le motoréducteur 52 pour actionner la pince 132 pour mettre en liaison thermique la paroi 12 avec l'écran 110. Ce faisant, on provoque également la liaison de la paroi 13 avec l'écran 200 et la liaison de la paroi 14 avec l'écran 300. Le voile 13.1 fait alors office d'obturateur de l'orifice 235 et le voile 14.1 fait alors office d'obturateur de l'orifice 335. Lorsque la température de la paroi 12 est sensiblement égale à la température de l'écran 110 (ici quatre kelvins), on commande le motoréducteur 52 pour actionner la pince 132 et supprimer la liaison thermique de la paroi 12 avec l'écran 110. Ce faisant, on supprime également la liaison de la paroi 13 avec l'écran 200 et la liaison de la paroi 14 avec l'écran 300.

On reproduit ensuite les étapes trois à huit décrites en référence au premier mode de réalisation de l'invention.

La figure 9 représente l'étape finale du deuxième mode de réalisation du procédé selon l'invention. A l'issue de cette étape, la portion ou paroi 12 est en liaison thermique avec l'écran 40 après avoir subi quatre refroidissements successifs de l'extérieur vers l'intérieur. Les voiles 13.1, 14.1, 15.1 et 16.1 de la canne 10 font office d'obturateurs respectivement des orifices 35, 135, 235 et 335 et améliorent l'isolation thermique relative des enceintes 31, 111, 201 et 301.

C'est-à-dire que le dispositif comprend un ensemble de mécanisme(s) d'actionnement qui commande(nt) l'ouverture ou la fermeture des pinces 32 et l'obturation ou non du ou des orifices par les caches 60, 63, 64, 65 de façon séquentielle (ou simultanée le cas échéant) pour maintenir fermés les orifices et éviter ou limiter des entrées thermiques lors des opérations d'entrée/sortie de la canne 10 par rapport à la ou les enceintes. De préférence, dans chaque configuration, le ou les orifices sont obturés soit par une paroi de la canne (voiles 13.1, 14.1, 15.1 et 16.1), soit par un cache 60.

Ceci permet un pré-refroidissement de la paroi 12 inférieure de la canne 10 qui est en liaison thermique avec l'emplacement 11 de réception d'échantillons à refroidir, pour refroidir les échantillons avant de les loger au niveau de la platine 40.

Lorsque la canne 10 est entièrement introduite dans l'unité de réfrigération, les échantillons sont logés au niveau de la platine 40 et maintenus à la température la plus froide. La canne 10 peut rester à demeure dans l'unité de réfrigération pendant les mesures et le fonctionnement (emplacement 11 reste solidaire de la canne 10). Les autres parois 13.1, 13, 14.1, 14, 15.1, 15 situées plus haut le long de la canne 10 forment des obturateurs des orifices des écrans qui limitent les entrées thermiques via les organes 32 de thermalisation qui les enserrent.

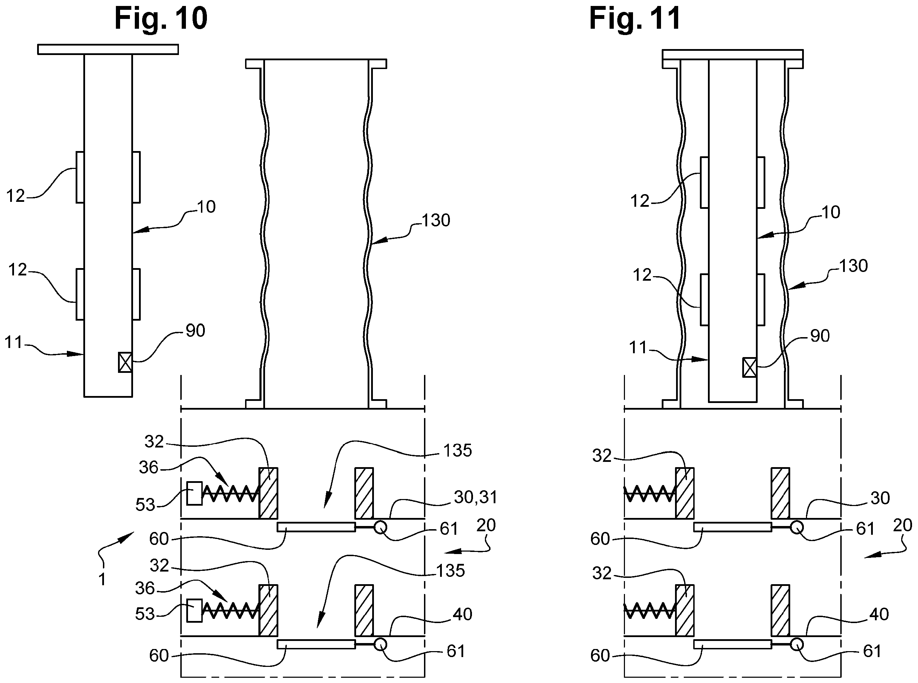

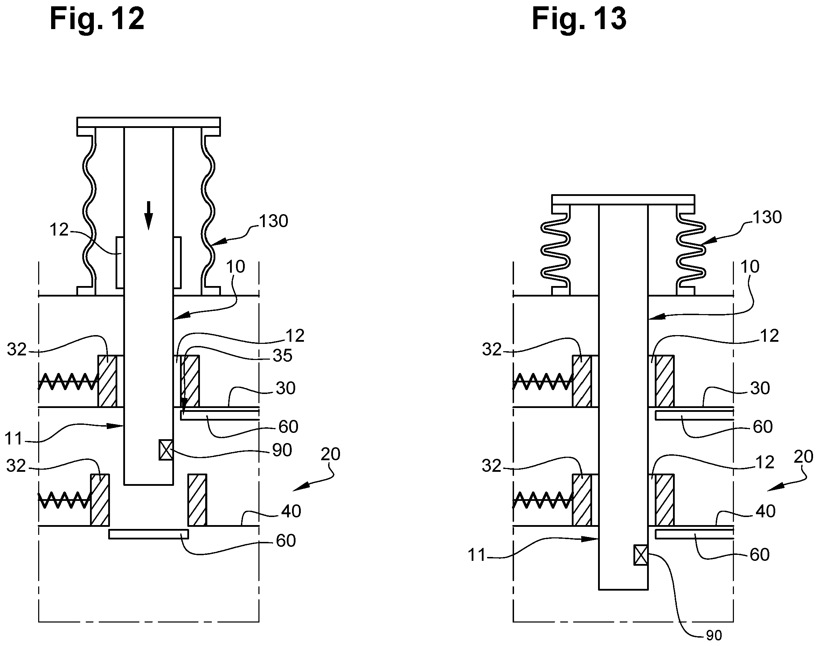

Les [Fig. 10], [Fig. 11], [Fig. 12], [Fig. 13] illustrent une autre variante de réalisation. Les éléments identiques à ceux décrits ci-dessus sont désignés par les mêmes références numériques.

Comme schématisé l'unité de réfrigération 20 comprend un ou plusieurs écrans thermiques 30 solidaire(s) d'enceintes 31 respectives. L'ensemble d'enceinte(s) abrite une platine 40 destinée à accueillir l'emplacement 11 de réception de la canne 10 muni du ou des échantillons 90 à refroidir. En particulier, la platine 40 peut être pourvue également d'un organe 32 de thermalisation mobile sur la platine 40 entre un premier état n'assurant pas de contact et de liaison thermique avec la portion 12 de la canne de refroidissement de l'emplacement 11 et un second état assurant un contact et une liaison thermique entre la portion 12 de la canne 10 pour refroidir l'emplacement 11. L'emplacement 11 porté par la canne 10 peut être délimité par une paroi conductrice thermique solidaire de la canne 10 et en liaison thermique avec la portion ou paroi 12 conductrice adjacente. Cet emplacement 11 peut comporter ou former un tube ou récipient concave porté par l'extrémité de la canne 10.

Dans la configuration de la [Fig. 10], la canne 10 est en dehors de l'unité de réfrigération (hors des enceintes). Dans cet exemple, la canne 10 comporte deux portions 12 conductrices espacées le long de la canne 10 et dont l'une est liée thermiquement à l'emplacement 11. Dans cette configuration, les deux orifices 35, 135 des écrans thermiques 30 et éventuellement la zone de réception de la platine 40 sont refermés par des caches 60 respectifs. Les orifices 35, 135 et la zone de réception de la platine 40 sont alignés.

L'ensemble peut être placé dans un boîtier extérieur (éventuellement sous vide) muni d'une entrée d'accès aux orifices 35, 135. Comme schématisé, l'entrée d'accès peut être délimitée par un soufflet 130 (qui peut faire partie d'un sas par exemple).

Comme illustré à la [Fig. 11], au début de l'introduction de la canne 10 dans l'unité 20 de réfrigération, l'extrémité inférieure de la canne 10 est placée dans le soufflet 130 et son extrémité supérieure peut le cas échéant être en contact étanche avec l'extrémité supérieure du soufflet 130.

La canne 10 est déplacée vers l'intérieur de l'unité 20 de réfrigération (par exemple au travers d'une porte du boîtier extérieur) jusqu'à ce que la portion 12 arrive au niveau du premier écran thermique 30 cf. [Fig. 12].

Comme décrit ci-dessus, le volet 60 est déplacé (dispositif d'actionnement 61) pour ouvrir l'orifice 35. La canne 10 est déplacée de manière à amener la portion 12 face à l'organe 32 de thermalisation. L'organe 32 de thermalisation (pinces ou mors par exemple) est actionné par le dispositif d'actionnement 53 pour venir en contact avec la portion 12 de la canne 10.

Lorsque la thermalisation de l'emplacement 11 à la température cible est réalisée, la canne 10 est introduite plus encore à l'intérieur de l'unité 20 de réfrigération. Le soufflet 130 est comprimé davantage. La portion 12 d'extrémité de la canne 10 arrive au niveau de la platine 40 ou elle est mise en liaison thermique de la même façon que précédemment de préférence à une température plus basse (déplacement d'un volet 60 et/ou d'un organe 32 de thermisation) cf. [Fig. 13].

En variante, la portion 12 d'extrémité de la canne 10 pourrait être en liaison thermique directement par contact avec un élément solidaire de la platine 40). L'emplacement 11 peut être encore refroidi à la température plus basse de la platine 40 via la portion 12 de la canne 10.

En même temps, l'autre portion 12 de la canne 10 située plus haut est thermalisée par l'écran thermique 30 précédent et referme l'orifice 35 correspondant. La structure de la canne 10 permet ainsi de refermer les différents orifices 35, 135 des enceintes pour éviter les entrées thermiques vers la platine 40.

Bien entendu, l'invention n'est pas non plus limitée à cet exemple schématique. Ainsi, le nombre de portions 12 à thermaliser de la canne 10 et le nombre d'écrans thermiques 30 de thermalisation peuvent être différents. Comme illustré, plusieurs portions 12 de la canne 10 peuvent être thermalisées à des niveaux de températures différents avec les écrans thermiques respectifs en même temps.

Selon l'invention, les liens mécaniques mobiles (organes 32 de thermisation mobiles) sont solidaires des écrans et de la platine 40 le cas échéant et non pas de la canne 10. Ceci permet de maximiser l'espace disponible sur la canne 10 de chargement, son encombrement et sa masse. La canne 10 est facilement déplaçable (introduction et retrait) quelle que soit la température et le vide dans l'unité 20 de réfrigération et sans nécessiter de la mettre à l'arrêt.

L'invention peut être appliquée de manière avantageuse réfrigérateur à dilution d'Hélium 3 dans de l'Hélium 4. Dans ce cas, un tube à gaz pulsé, un cryogénérateur (cryo-refroidisseur), ou tout autre source froide appropriée, peuvent être utilisés pour thermaliser les enceintes 111 et 201, l'enceinte 31 étant thermalisée par exemple par un bain pompé d'Hélium (ou toute autre source froide tel qu'un refroidisseur cryogénique par exemple) et la platine 40 accueillant la boîte à mélange du réfrigérateur à dilution. Le chargement d'un échantillon à refroidir à la température de la platine 40 peut alors se faire aisément grâce à l'invention, sans arrêter le fonctionnement du système 1.

Bien entendu, l'invention n'est pas limitée au mode de réalisation décrit mais englobe toute variante entrant dans le champ de l'invention telle que définie par les revendications.

En particulier,
- bien qu'ici la température du premier écran soit sensiblement égale à un Kelvin, l'invention s'applique également à d'autres valeurs de la première température, comme par exemple des températures comprises entre six et douze dixièmes de Kelvin ;
- bien qu'ici les parois de la canne soient cylindriques, l'invention s'applique également à d'autres types de portions de liaison thermique de la canne aux organes de thermalisation, comme par exemple des tiges de cuivre, des parois de forme carré ou quelconque, l'orifice des pinces de thermalisation étant alors adapté en fonction ;
- bien qu'ici le système comprenne des pinces de thermalisation, l'invention s'applique également à d'autres dispositifs de thermalisation comme par exemple des cames ou des balais conducteurs ou tout autre dispositif adapté ;

- bien qu'ici le premier arbre soit relié à un motoréducteur électrique, l'invention s'applique également à d'autres types d'unités motrices communes aux premier et deuxième dispositifs d'actionnement comme par exemple un actionneur pneumatique, hydraulique, linéaire ou non ;
- bien qu'ici le volet soit relié thermiquement au premier écran lorsqu'il est dans sa configuration d'obturation, l'invention s'applique également à d'autres types de liaisons thermiques du volet à l'écran comme par exemple une liaison permanente à l'aide d'une tresse en cuivre ;
- bien qu'ici la canne comprenne un réseau de communication optique, électrique et fluidique, l'invention s'applique également à une canne ne comprenant qu'un seul ou seulement deux de ces réseaux de communication ;
- le déplacement de la canne dans et hors de l'unité de réfrigération peut être réalisé à l'aide d'un actionneur. On indexera alors avantageusement cet actionneur avec les mouvements de l'unité motrice commune pour obtenir une automatisation complète des opérations de chargement/déchargement de l'échantillon dans le système de réfrigération de l'invention ;
- bien qu'ici le passage du volet de sa configuration d'ouverture à sa configuration de fermeture soit réalisé à l'aide d'un deuxième dispositif d'actionnement, l'invention s'applique également à d'autres types de deuxième dispositif d'actionnement tel qu'un actionneur linéaire dédié, voire aucun deuxième dispositif d'actionnement dans le cas d'un volet monté à rotation et qui serait poussé par la canne ;
- bien qu'ici la pince comprenne un ressort pour modifier l'état de la pince, l'invention s'applique également à d'autres types d'éléments de rappel en position comme par exemple un aimant, une répartition des masses mettant à profit la gravité, des rondelles Belleville, un élément élastomère.
- l'invention peut être appliquée à tout autre système de réfrigération sub-kelvin, tel qu'un réfrigération à détente Joule-Thompson à He3 ou à He4, un réfrigérateur He3, un réfrigérateur à désaimantation adiabatique.
- dans une variante de réalisation, notamment lors de l'introduction de la canne dans les enceintes, toutes les parois de la canne ne sont pas forcément thermalisées par des pinces, ainsi, une seule ou une partie seulement des parois peuvent être thermalisée(s) par une pince, en particulier seule la paroi d'extrémité 12 pourrait être thermalisée ;
- ici on parle de vide à une pression inférieure à un dix-millième de millibar, mais l'invention pourrait être réalisée également avec un vide à une pression inférieure à un centième de millibar,
- le ou les organes de thermalisation mobiles (pince(s) ou autre) sont montés mobiles sur l'enceinte entre au moins deux positions ou états assurant contact (liaison thermique) ou non (pas de contact) entre la portion de la canne et l'écran thermique refroidi,
- l'organe de thermalisation est monté mobile relativement à l'orifice de passage, par exemple monté mobile sur l'écran thermique ou sur tout autre partie fixe de l'unité de réfrigération,
- l'organe de thermalisation est monté mobile sur l'unité de réfrigération, par exemple sur l'écran thermique au niveau de l'orifice de passage, pour sélectivement mettre en liaison thermique ou non la portion de la canne et l'écran thermique lorsque la portion est située au niveau de l'orifice de passage (par exemple dans l'orifice de passage),
- au moins une partie de l'organe de thermalisation est monté mobile selon un mouvement transversal à l'axe longitudinal de la canne lorsque la canne est introduite dans la l'enceinte thermique, notamment dans l'orifice de passage,
- l'unité de réfrigération comprend un actionneur commandé (par exemple premier dispositif d'actionnement) qui commande la position de l'organe de thermalisation (premier et/ou second état),
- l'actionneur qui déplace l'organe de thermalisation est indépendant de la canne et en particulier distinct de la canne,
- le ou les mors ont la forme d'une portion de bague, par exemple une demi bague disposée autour de l'orifice de passage,
- de préférence un seul mors est mobile et actionnable transversalement à l'orifice pour assurer ou non la liaison thermique mais les deux mors peuvent être montés mobiles et actionnables pour assurer soit un serrage (contact thermique) ou un desserrage (pas de contact thermique).

## Revendications

1. Système de réfrigération (1) comportant:
- une canne (10) de chargement pourvue d'un emplacement (11) de réception d'un échantillon (90) à refroidir ; et
- une unité (20) de réfrigération qui comprend un premier écran thermique (30) qui définit au moins partiellement une première enceinte thermique (31) et une platine (40) située à l'intérieur de la première enceinte (31) thermique, la platine (40) comprenant un logement configuré pour recevoir l'emplacement (11) de réception de la canne (10) et assurer une liaison thermique entre l'emplacement de réception (11) et la platine (40), le premier écran thermique (30) comprenant un premier orifice (35) de passage de la canne (10), la canne (10) pouvant être introduite ou retirée de la première enceinte (31) thermique via le premier orifice (35) et l'unité de réfrigération (20) comprend un premier organe de thermalisation (32) configuré pour permettre un échange thermique entre une première portion (12) de la canne (10) et le premier écran thermique (30) lorsque la canne (10) est introduite dans la première enceinte (31) thermique, **caractérisé en ce que** au moins une partie du premier organe de thermalisation (32) est mobile pour sélectivement mettre en liaison thermique ou non la première portion (12) de la canne (10) et le premier écran thermique (30).

2. Système de réfrigération (1) selon la revendication 1 dans lequel le premier organe de thermalisation (32) est monté mobile sur la première enceinte (31) thermique entre un premier état n'assurant pas de contact et de liaison thermique entre la première portion (12) de la canne (10) et le premier écran thermique (30), et un second état assurant un contact et une liaison thermique entre la première portion (12) de la canne (10) et le premier écran thermique (30).

3. Système de réfrigération (1) selon l'une quelconque des revendications 1 ou 2, dans lequel le premier organe de thermalisation (32) comprend un premier mors (33) mobile et un deuxième mors (34) fixe ou mobile.

4. Système de réfrigération (1) selon l'une quelconque des revendications 1 à 3, comprenant un premier dispositif d'actionnement (53) configuré pour faire passer le premier organe de thermalisation (32) depuis son deuxième état vers son premier état.

5. Système de réfrigération (1) selon l'une quelconque des revendications 1 à 4, dans lequel le premier organe de thermalisation (32) comprend au moins un élément de rappel en position (36) agencé pour provoquer le passage du premier organe de thermalisation (32) depuis le premier état dans lequel la première portion (12) n'est pas en liaison thermique avec le premier écran thermique (30) vers le deuxième état dans lequel la première portion (12) est en liaison thermique avec le premier écran thermique (30).

6. Système de réfrigération (1) selon l'une quelconque des revendications précédentes, comprenant un volet (60) d'obturation du premier orifice (35).

7. Système de réfrigération (1) selon la revendication 6 dans lequel le volet (60) est thermiquement relié au premier écran (30) thermique.

8. Système de réfrigération (1) selon la revendication 6 ou 7, comprenant un deuxième dispositif d'actionnement (61) pour sélectivement faire passer le volet (60) entre une première configuration d'obturation du premier orifice (35) et une deuxième configuration de libération du premier orifice (35).

9. Système de réfrigération (1) selon les revendications 4 et 8, dans lequel le premier dispositif d'actionnement (53) et le deuxième dispositif d'actionnement (61) comprennent une unité motrice commune (52).

10. Système de réfrigération (1) selon la revendication 9, dans lequel un organe de liaison de l'unité motrice (52) au premier dispositif d'actionnement (53) et au deuxième dispositif d'actionnement (61) comprend un premier arbre (50) monté à rotation relativement au premier écran (30).

11. Système de réfrigération (1) selon la revendication 10, dans lequel le deuxième dispositif d'actionnement (61) comprend une liaison en rotation du volet (60) au premier arbre (50).

12. Système de réfrigération (1) selon l'une quelconque des revendications 4 ou 9, dans lequel le premier dispositif d'actionnement (53) comprend un ensemble bielle (54) et manivelle (56).

13. Système de réfrigération (1) selon l'une quelconque des revendications précédentes, dans lequel la canne (10) comprend un réseau (70) de communication optique et/ou électrique et/ou fluidique relié à une interface de connexion (71) solidaire de la canne (10).

14. Système de réfrigération (1) selon l'une quelconque des revendications précédentes, dans lequel l'unité de réfrigération (20) est configurée de manière à ce que, en fonctionnement, une première température du premier écran thermique (30) soit inférieure ou égale à une première température déterminée, par exemple un Kelvin, et de manière à ce qu'une deuxième température déterminée de la platine (40) soit inférieure à la première température du premier écran thermique (30) et par exemple égale à trois cents milliKelvins.

15. Système de réfrigération (1) selon l'une quelconque des revendications précédentes, dans lequel la canne (10) comprend sur sa longueur plusieurs portion (12, 13) distinctes aptes à coopérer avec le premier organe de thermalisation (32) et en particulier une deuxième portion (13) apte à coopérer avec le premier organe de thermalisation (32).

16. Système de réfrigération (1) selon l'une quelconque des revendications précédentes, dans lequel l'unité de réfrigération (20) comprend plusieurs écrans thermiques et en particulier au moins un écran thermique supplémentaire (110) en plus du premier écran thermique (30), les écrans thermiques définissant des enceintes thermiques respectives s'étendant l'une autour de l'autre, chaque enceinte comprenant un orifice de passage de la canne (10) et un organe de thermalisation qui est agencé pour permettre de mettre sélectivement en liaison thermique une portion (12, 13) de la canne (10) et l'écran thermique, les orifices de passage étant alignés, la canne (10) pouvant être introduite ou retirée des enceintes thermique via les orifice (35) alignés.

17. Système de réfrigération (1) selon les revendications 15 et 16, **caractérisé en ce que**, en configuration de fonctionnement du système de réfrigération, la canne (10) de chargement est logée dans l'unité (20) de réfrigération, l'emplacement de réception (11) de la canne (10) étant en liaison thermique avec la platine (40), au moins une partie des orifices de passage des écrans thermiques étant refermés par des portions (12, 13) de la canne (10) en contact et liaison thermique avec les organes de thermalisation correspondants.

18. Système de réfrigération (1) selon l'une quelconque des revendications précédentes, dans lequel l'unité de réfrigération (20) comprend:
- un premier écran thermique supplémentaire (110) qui définit une deuxième enceinte thermique (111) s'étendant autour de la première enceinte thermique (31), la deuxième enceinte thermique (110) comprenant un deuxième orifice (135) de passage de la canne (10) et un deuxième organe de thermalisation (132) qui est agencé pour sélectivement mettre en liaison thermique la première portion (12) et le premier écran thermique supplémentaire (110) ;
- un deuxième écran thermique supplémentaire (200) qui définit une troisième enceinte thermique (201) s'étendant autour de la deuxième enceinte thermique (111), la troisième enceinte thermique (201) comprenant un troisième orifice (235) de passage de la canne (10) et un troisième organe de thermalisation (232) qui est agencé pour sélectivement mettre en liaison thermique la première portion (10) et le deuxième écran thermique supplémentaire (200);
- un troisième écran thermique supplémentaire (300) qui définit une quatrième enceinte thermique (301) s'étendant autour de la troisième enceinte thermique (201), la quatrième enceinte thermique (301) comprenant un quatrième orifice (335) de passage de la canne (10).

19. Procédé de chargement d'un échantillon dans un système de réfrigération (1) selon l'une quelconque des revendications précédentes, comprenant les étapes suivantes, le système de réfrigération (1) étant en fonctionnement :
- placer un échantillon (90) au niveau de l'emplacement de réception (11) de la canne (10);
- déplacer la canne (10) à travers le premier orifice (35) de manière à amener la première portion (12) en regard du premier organe de thermalisation (32),
- actionner le premier organe de thermalisation (32) pour mettre en liaison thermique la première portion (12) avec le premier écran thermique (30),
- lorsqu'une température de la première portion (12) est sensiblement égale à une température du premier écran (30), actionner le premier organe de thermalisation (32) pour supprimer une liaison thermique de la première portion (12) avec le premier écran (30),
- déplacer la canne (10) pour relier thermiquement la première portion de la canne (10) à l'écran thermique suivant ou à la platine (40).

20. Procédé selon la revendication 19 dans lequel la canne (10) comprend sur sa longueur plusieurs portions (12, 13) configurées pour être mises en contact et en liaison thermique ou non avec les écrans thermiques de l'unité de réfrigération (20), le procédé comprenant une pluralité de déplacements la canne (10) à travers les orifices de manière à amener des portions (12,13) en regard d'organes de thermalisation (32) et une pluralité d'actionnements des organes de thermalisation (32) pour mettre en liaison thermique les portions (12, 13) avec les écrans thermiques.

21. Procédé selon la revendication 19 ou 20, dans lequel, l'unité de réfrigération (20) comprenant également :
- un premier écran thermique supplémentaire (110) qui définit une deuxième enceinte thermique (111) s'étendant autour de la première enceinte thermique (31), la deuxième enceinte thermique (110) comprenant un deuxième orifice (135) de passage de la canne (10) et un deuxième organe de thermalisation (132) qui est agencé pour sélectivement mettre en liaison thermique la première portion (12) et le premier écran thermique supplémentaire (110) ;
- un deuxième écran thermique supplémentaire (200) qui définit une troisième enceinte thermique (201) s'étendant autour de la deuxième enceinte thermique (111), la troisième enceinte thermique (201) comprenant un troisième orifice (235) de passage de la canne (10) et un troisième organe de thermalisation (232) qui est agencé pour sélectivement mettre en liaison thermique la première portion (10) et le deuxième écran thermique supplémentaire (200);
- un troisième écran thermique supplémentaire (300) qui définit une quatrième enceinte thermique (301) s'étendant autour de la troisième enceinte thermique (201), la quatrième enceinte thermique (301) comprenant un quatrième orifice (335) de passage de la canne (10),
le procédé comprenant les étapes supplémentaires de:
- déplacer la canne (10) à travers le quatrième orifice (335) et le troisième orifice (235) de manière à amener la première portion (12) en regard du troisième organe de thermalisation (232),
- actionner le troisième organe de thermalisation (232) pour mettre en liaison thermique la première portion (12) avec le deuxième écran thermique supplémentaire (200),
- lorsqu'une température de la première portion (12) est sensiblement égale à une température du deuxième écran thermique supplémentaire (200), actionner le troisième organe de thermalisation (232) pour supprimer une liaison thermique de la première portion (12) avec le deuxième écran thermique supplémentaire (200);
- déplacer la canne (10) dans le deuxième orifice (135) de manière à amener la première portion (12) en regard du deuxième organe de thermalisation (132),
- actionner le deuxième organe de thermalisation (132) pour mettre en liaison thermique la première portion (12) avec le premier écran thermique supplémentaire (110),
- lorsqu'une température de la première portion (12) est sensiblement égale à une température du premier écran thermique supplémentaire (110), actionner le deuxième organe de thermalisation (132) pour supprimer une liaison thermique de la première portion (12) avec le premier écran thermique supplémentaire (110).

## Patentansprüche

1. Ein Kühlsystem (1), umfassend: einen Lade-Stab (10), der mit einer Aufnahmevorrichtung (11) für eine zu kühlende Probe (90) versehen ist; und eine Kühleinheit (20), die ein erstes Wärmeschild (30), das zumindest teilweise ein erstes Wärmegehäuse (31) definiert, und eine Platte (40) umfasst, die sich im Inneren des ersten Wärmegehäuses (31) befindet, wobei die Platte (40) ein Gehäuse umfasst, das konfiguriert ist, um die Aufnahmevorrichtung (11) des Stabs (10) aufzunehmen und eine thermische Verbindung zwischen der Aufnahmevorrichtung (11) und der Platte (40) sicherzustellen, wobei das erste Wärmeschild (30) eine erste Öffnung (35) für den Durchgang des Stabs (10) umfasst, wobei der Stab (10) durch die erste Öffnung (35) in das erste Wärmegehäuse (31) eingeführt oder daraus entfernt werden kann, und die Kühleinheit (20) ein erstes Thermalisierungsorgan (32) umfasst, das konfiguriert ist, um einen Wärmeaustausch zwischen einem ersten Abschnitt (12) des Stabs (10) und dem ersten Wärmeschild (30) zu ermöglichen, wenn der Stab (10) in das erste Wärmegehäuse (31) eingeführt wird, **dadurch gekennzeichnet, dass** zumindest ein Teil des ersten Thermalisierungsorgan (32) beweglich ist, um den ersten Abschnitt (12) des Stabs (10) und das erste Wärmeschild (30) selektiv in thermische Verbindung zu bringen oder nicht.

2. Kühlsystem (1) nach Anspruch 1, wobei das erste Thermalisierungsorgan (32) beweglich an dem ersten Wärmegehäuse (31) montiert ist zwischen einem ersten Zustand, der keinen Kontakt und keine thermische Verbindung zwischen dem ersten Abschnitt (12) des Stabs (10) und dem ersten Wärmeschild (30) sicherstellt, und einem zweiten Zustand, der einen Kontakt und eine thermische Verbindung zwischen dem ersten Abschnitt (12) des Stabs (10) und dem ersten Wärmeschild (30) sicherstellt.

3. Kühlsystem (1) nach einem der Ansprüche 1 oder 2, wobei das erste Thermalisierungsorgan (32) eine erste bewegliche Backe (33) und eine zweite feste oder bewegliche Backe (34) umfasst.

4. Kühlsystem (1) nach einem der Ansprüche 1 bis 3, umfassend eine erste Betätigungsvorrichtung (53), die konfiguriert ist, um das erste Thermalisierungsorgan (32) von seinem zweiten Zustand in seinen ersten Zustand zu überführen.

5. Kühlsystem (1) nach einem der Ansprüche 1 bis 4, wobei das erste Thermalisierungsorgan (32) mindestens ein Rückstellelement (36) umfasst, das angeordnet ist, um das Überführen des ersten Thermalisierungsorgans (32) aus dem ersten Zustand, in dem der erste Abschnitt (12) nicht in thermischer Verbindung mit dem ersten Wärmeschild (30) steht, in den zweiten Zustand, in dem der erste Abschnitt (12) in thermischer Verbindung mit dem ersten Wärmeschild (30) steht, zu bewirken.

6. Kühlsystem (1) nach einem der vorhergehenden Ansprüche, umfassend eine Klappe (60) zum Verschließen der ersten Öffnung (35).

7. Kühlsystem (1) nach Anspruch 6, wobei die Klappe (60) thermisch mit dem ersten Wärmeschild (30) verbunden ist.

8. Kühlsystem (1) nach Anspruch 6 oder 7, umfassend eine zweite Betätigungsvorrichtung (61), um die Klappe (60) selektiv zwischen einer ersten Konfiguration zum Verschließen der ersten Öffnung (35) und einer zweiten Konfiguration zum Freigeben der ersten Öffnung (35) zu bewegen.

9. Kühlsystem (1) nach den Ansprüchen 4 und 8, wobei die erste Betätigungsvorrichtung (53) und die zweite Betätigungsvorrichtung (61) eine gemeinsame Motoreinheit (52) umfassen.

10. Kühlsystem (1) nach Anspruch 9, wobei ein Verbindungsorgan der Motoreinheit (52) mit der ersten Betätigungsvorrichtung (53) und der zweiten Betätigungsvorrichtung (61) eine erste Welle (50) umfasst, die relativ zum ersten Wärmeschild (30) drehbar gelagert ist.

11. Kühlsystem (1) nach Anspruch 10, wobei die zweite Betätigungsvorrichtung (61) eine Drehverbindung der Klappe (60) mit der ersten Welle (50) umfasst.

12. Kühlsystem (1) nach einem der Ansprüche 4 oder 9, wobei die erste Betätigungsvorrichtung (53) eine Pleuelstangen- (54) und Kurbel- (56) Baugruppe umfasst.

13. Kühlsystem (1) nach einem der vorhergehenden Ansprüche, wobei der Stab (10) ein optisches und/oder elektrisches und/oder fluides Kommunikationsnetz (70) umfasst, das mit einer Verbindungsschnittstelle (71) verbunden ist, die fest mit dem Stab (10) verbunden ist.

14. Kühlsystem (1) nach einem der vorhergehenden Ansprüche, wobei die Kühleinheit (20) so konfiguriert ist, dass im Betrieb eine erste Temperatur des ersten Wärmeschildes (30) kleiner oder gleich einer ersten bestimmten Temperatur ist, beispielsweise einem Kelvin, und dass eine zweite bestimmte Temperatur der Platte (40) niedriger als die erste Temperatur des ersten Wärmeschildes (30) und beispielsweise gleich dreihundert MilliKelvin ist.

15. Kühlsystem (1) nach einem der vorhergehenden Ansprüche, wobei der Stab (10) über seine Länge mehrere verschiedene Abschnitte (12, 13) umfasst, die geeignet sind, mit dem ersten Thermalisierungsorgan (32) zusammenzuwirken, und insbesondere einen zweiten Abschnitt (13), der geeignet ist, mit dem ersten Thermalisierungsorgan (32) zusammenzuwirken.

16. Kühlsystem (1) nach einem der vorhergehenden Ansprüche, wobei die Kühleinheit (20) mehrere Wärmeschilde und insbesondere mindestens ein zusätzliches Wärmeschild (110) zusätzlich zum ersten Wärmeschild (30) umfasst, wobei die Wärmeschilde jeweilige Wärmegehäuse definieren, die sich umeinander erstrecken, wobei jedes Gehäuse eine Durchgangsöffnung für den Stab (10) und ein Thermalisierungsorgan umfasst, das angeordnet ist, um selektiv einen Abschnitt (12, 13) des Stabs (10) und das Wärmeschild in thermische Verbindung zu bringen, wobei die Durchgangsöffnungen ausgerichtet sind, und der Stab (10) durch die ausgerichteten Öffnungen (35) in die Wärmegehäuse eingeführt oder daraus entfernt werden kann.

17. Kühlsystem (1) nach den Ansprüchen 15 und 16, **dadurch gekennzeichnet, dass** in der Betriebskonfiguration des Kühlsystems der Lade-Stab (10) in der Kühleinheit (20) untergebracht ist, wobei die Aufnahmevorrichtung (11) des Stabs (10) in thermischer Verbindung mit der Platte (40) steht, wobei mindestens ein Teil der Durchgangsöffnungen der Wärmeschilde durch Abschnitte (12, 13) des Stabs (10) in Kontakt und thermischer Verbindung mit den entsprechenden Thermalisierungsorganen verschlossen ist.

18. Kühlsystem (1) nach einem der vorhergehenden Ansprüche, wobei die Kühleinheit (20) umfasst:
- ein erstes zusätzliches Wärmeschild (110), das ein zweites Wärmegehäuse (111) definiert, das sich um das erste Wärmegehäuse (31) erstreckt, wobei das zweite Wärmegehäuse (110) eine zweite Öffnung (135) für den Durchgang des Stabs (10) und ein zweites Thermalisierungsorgan (132) umfasst, das angeordnet ist, um den ersten Abschnitt (12) und das erste zusätzliche Wärmeschild (110) selektiv in thermische Verbindung zu bringen;
- ein zweites zusätzliches Wärmeschild (200), das ein drittes Wärmegehäuse (201) definiert, das sich um das zweite Wärmegehäuse (111) erstreckt, wobei das dritte Wärmegehäuse (201) eine dritte Öffnung (235) für den Durchgang des Stabs (10) und ein drittes Thermalisierungsorgan (232) umfasst, das angeordnet ist, um den ersten Abschnitt (10) und das zweite zusätzliche Wärmeschild (200) selektiv in thermische Verbindung zu bringen;
- ein drittes zusätzliches Wärmeschild (300), das ein viertes Wärmegehäuse (301) definiert, das sich um das dritte Wärmegehäuse (201) erstreckt, wobei das vierte Wärmegehäuse (301) eine vierte Öffnung (335) für den Durchgang des Stabs (10) umfasst.

19. Ein Verfahren zum Laden einer Probe in ein Kühlsystem (1) nach einem der vorhergehenden Ansprüche, umfassend die folgenden Schritte, wobei das Kühlsystem (1) in Betrieb ist:
- Platzieren einer Probe (90) auf der Höhe der Aufnahmevorrichtung (11) des Stabs (10);
- Bewegen des Stabs (10) durch die erste Öffnung (35), um den ersten Abschnitt (12) gegenüber dem ersten Thermalisierungsorgan (32) zu bringen,
- Betätigen des ersten Thermalisierungsorgans (32), um den ersten Abschnitt (12) in thermische Verbindung mit dem ersten Wärmeschild (30) zu bringen,
- wenn eine Temperatur des ersten Abschnitts (12) im Wesentlichen gleich einer Temperatur des ersten Wärmeschilds (30) ist, Betätigen des ersten Thermalisierungsorgans (32), um eine thermische Verbindung des ersten Abschnitts (12) mit dem ersten Wärmeschild (30) zu unterbrechen,
- Bewegen des Stabs (10), um den ersten Abschnitt des Stabs (10) thermisch mit dem nächsten Wärmeschild oder der Platte (40) zu verbinden.

20. Verfahren nach Anspruch 19, wobei der Stab (10) über seine Länge mehrere Abschnitte (12, 13) umfasst, die so konfiguriert sind, dass sie mit den Wärmeschilden der Kühleinheit (20) in Kontakt und in thermische Verbindung gebracht werden oder nicht, wobei das Verfahren eine Vielzahl von Bewegungen des Stabs (10) durch die Öffnungen umfasst, um Abschnitte (12, 13) gegenüber den Thermalisierungsorganen (32) zu bringen, und eine Vielzahl von Betätigungen der Thermalisierungsorgane (32), um die Abschnitte (12, 13) mit den Wärmeschilden in thermische Verbindung zu bringen.

21. Verfahren nach Anspruch 19 oder 20, wobei die Kühleinheit (20) ebenfalls umfasst:
- ein erstes zusätzliches Wärmeschild (110), das ein zweites Wärmegehäuse (111) definiert, das sich um das erste Wärmegehäuse (31) erstreckt, wobei das zweite Wärmegehäuse (110) eine zweite Öffnung (135) für den Durchgang des Stabs (10) und ein zweites Thermalisierungsorgan (132) umfasst, das angeordnet ist, um den ersten Abschnitt (12) und das erste zusätzliche Wärmeschild (110) selektiv in thermische Verbindung zu bringen;
- ein zweites zusätzliches Wärmeschild (200), das ein drittes Wärmegehäuse (201) definiert, das sich um das zweite Wärmegehäuse (111) erstreckt, wobei das dritte Wärmegehäuse (201) eine dritte Öffnung (235) für den Durchgang des Stabs (10) und ein drittes Thermalisierungsorgan (232) umfasst, das angeordnet ist, um den ersten Abschnitt (10) und das zweite zusätzliche Wärmeschild (200) selektiv in thermische Verbindung zu bringen;
- ein drittes zusätzliches Wärmeschild (300), das ein viertes Wärmegehäuse (301) definiert, das sich um das dritte Wärmegehäuse (201) erstreckt, wobei das vierte Wärmegehäuse (301) eine vierte Öffnung (335) für den Durchgang des Stabs (10) umfasst,
das Verfahren umfassend die zusätzlichen Schritte:
- Bewegen des Stabs (10) durch die vierte Öffnung (335) und die dritte Öffnung (235), um den ersten Abschnitt (12) gegenüber dem dritten Thermalisierungsorgan (232) zu bringen,
- Betätigen des dritten Thermalisierungsorgans (232), um den ersten Abschnitt (12) in thermische Verbindung mit dem zweiten zusätzlichen Wärmeschild (200) zu bringen,
- wenn eine Temperatur des ersten Abschnitts (12) im Wesentlichen gleich einer Temperatur des zweiten zusätzlichen Wärmeschilds (200) ist, Betätigen des dritten Thermalisierungsorgans (232), um eine thermische Verbindung des ersten Abschnitts (12) mit dem zweiten zusätzlichen Wärmeschild (200) zu unterbrechen,
- Bewegen des Stabs (10) in die zweite Öffnung (135), um den ersten Abschnitt (12) gegenüber dem zweiten Thermalisierungsorgan (132) zu bringen,
- Betätigen des zweiten Thermalisierungsorgans (132), um den ersten Abschnitt (12) in thermische Verbindung mit dem ersten zusätzlichen Wärmeschild (110) zu bringen,
- wenn eine Temperatur des ersten Abschnitts (12) im Wesentlichen gleich einer Temperatur des ersten zusätzlichen Wärmeschilds (110) ist, Betätigen des zweiten Thermalisierungsorgans (132), um eine thermische Verbindung des ersten Abschnitts (12) mit dem ersten zusätzlichen Wärmeschild (110) zu unterbrechen.

## Claims

1. A refrigeration system (1) comprising: a loading cane (10) provided with a receiving location (11) for a sample (90) to be cooled; and a refrigeration unit (20) which comprises a first thermal shield (30) which defines at least partially a first thermal enclosure (31) and a stage (40) located inside the first thermal enclosure (31), the stage (40) comprising a housing configured to receive the receiving location (11) of the cane (10) and to ensure a thermal link between the receiving location (11) and the stage (40), the first thermal shield (30) comprising a first orifice (35) for the passage of the cane (10), the cane (10) being able to be introduced into or withdrawn from the first thermal enclosure (31) via the first orifice (35) and the refrigeration unit (20) comprises a first thermalization member (32) configured to allow a thermal exchange between a first portion (12) of the cane (10) and the first thermal shield (30) when the cane (10) is introduced into the first thermal enclosure (31), **characterized in that** at least a part of the first thermalization member (32) is mobile to selectively bring into thermal connection or not the first portion (12) of the cane (10) and the first thermal shield (30).

2. The refrigeration system (1) according to claim 1, in which the first thermalization member (32) is mounted so as to be mobile on the first thermal enclosure (31) between a first state not ensuring contact and thermal connection between the first portion (12) of the cane (10) and the first thermal shield (30), and a second state ensuring contact and a thermal connection between the first portion (12) of the cane (10) and the first thermal shield (30).

3. The refrigeration system (1) according to any one of claims 1 or 2, in which the first thermalization member (32) comprises a first mobile jaw (33) and a second fixed or mobile jaw (34).

4. The refrigeration system (1) according to any one of claims 1 to 3, comprising a first actuation device (53) configured to cause the first thermalization member (32) to pass from its second state to its first state.

5. The refrigeration system (1) according to any one of claims 1 to 4, in which the first thermalization member (32) comprises at least one position-return element (36) arranged to cause the first thermalization member (32) to pass from the first state in which the first portion (12) is not in thermal connection with the first thermal shield (30) to the second state in which the first portion (12) is in thermal connection with the first thermal shield (30).

6. The refrigeration system (1) according to any one of the preceding claims, comprising a shutter (60) for closing the first orifice (35).

7. The refrigeration system (1) according to claim 6, in which the shutter (60) is thermally connected to the first thermal shield (30).

8. The refrigeration system (1) according to claim 6 or 7, comprising a second actuation device (61) to selectively cause the shutter (60) to pass between a first configuration for closing the first orifice (35) and a second configuration for releasing the first orifice (35).

9. The refrigeration system (1) according to claims 4 and 8, in which the first actuation device (53) and the second actuation device (61) comprise a common motor unit (52).

10. The refrigeration system (1) according to claim 9, in which a member for linking the motor unit (52) to the first actuation device (53) and to the second actuation device (61) comprises a first shaft (50) mounted to rotate relative to the first thermal shield (30).

11. The refrigeration system (1) according to claim 10, in which the second actuation device (61) comprises a rotational connection of the shutter (60) to the first shaft (50).

12. The refrigeration system (1) according to any one of claims 4 or 9, in which the first actuation device (53) comprises a connecting rod (54) and crank (56) assembly.

13. The refrigeration system (1) according to any one of the preceding claims, in which the cane (10) comprises an optical and/or electrical and/or fluidic communication network (70) connected to a connection interface (71) integral with the cane (10).

14. The refrigeration system (1) according to any one of the preceding claims, in which the refrigeration unit (20) is configured so that, in operation, a first temperature of the first thermal shield (30) is less than or equal to a first determined temperature, for example one Kelvin, and so that a second determined temperature of the stage (40) is lower than the first temperature of the first thermal shield (30) and for example equal to three hundred milliKelvins.

15. The refrigeration system (1) according to any one of the preceding claims, in which the cane (10) comprises over its length several distinct portions (12, 13) suitable for cooperating with the first thermalization member (32) and in particular a second portion (13) suitable for cooperating with the first thermalization member (32).

16. The refrigeration system (1) according to any one of the preceding claims, in which the refrigeration unit (20) comprises several thermal shields and in particular at least one additional thermal shield (110) in addition to the first thermal shield (30), the thermal shields defining respective thermal enclosures extending one around the other, each enclosure comprising a passage orifice for the cane (10) and a thermalization member which is arranged to allow selectively placing in thermal connection a portion (12, 13) of the cane (10) and the thermal shield, the passage orifices being aligned, the cane (10) being able to be introduced into or withdrawn from the thermal enclosures via the aligned orifices (35).

17. The refrigeration system (1) according to claims 15 and 16, **characterized in that**, in the operating configuration of the refrigeration system, the loading cane (10) is housed in the refrigeration unit (20), the receiving location (11) of the cane (10) being in thermal connection with the stage (40), at least a part of the passage orifices of the thermal shields being closed by portions (12, 13) of the cane (10) in contact and thermal connection with the corresponding thermalization members.

18. The refrigeration system (1) according to any one of the preceding claims, in which the refrigeration unit (20) comprises:
- a first additional thermal shield (110) that defines a second thermal enclosure (111) extending around the first thermal enclosure (31), the second thermal enclosure (110) comprising a second orifice (135) for the passage of the cane (10) and a second thermalization member (132) which is arranged to selectively bring into thermal connection the first portion (12) and the first additional thermal shield (110);
- a second additional thermal shield (200) that defines a third thermal enclosure (201) extending around the second thermal enclosure (111), the third thermal enclosure (201) comprising a third orifice (235) for the passage of the cane (10) and a third thermalization member (232) which is arranged to selectively bring into thermal connection the first portion (10) and the second additional thermal shield (200);
- a third additional thermal shield (300) that defines a fourth thermal enclosure (301) extending around the third thermal enclosure (201), the fourth thermal enclosure (301) comprising a fourth orifice (335) for the passage of the cane (10).

19. A method of loading a sample in a refrigeration system (1) according to any one of the preceding claims, comprising the following steps, the refrigeration system (1) being in operation:
- placing a sample (90) at the level of the receiving location (11) of the cane (10);
- moving the cane (10) through the first orifice (35) so as to bring the first portion (12) opposite the first thermalization member (32),
- actuating the first thermalization member (32) to bring the first portion (12) into thermal connection with the first thermal shield (30),
- when a temperature of the first portion (12) is substantially equal to a temperature of the first thermal shield (30), actuating the first thermalization member (32) to suppress a thermal connection of the first portion (12) with the first thermal shield (30),
- moving the cane (10) to thermally connect the first portion of the cane (10) to the next thermal shield or to the stage (40).

20. The method according to claim 19, in which the cane (10) comprises over its length several portions (12, 13) configured to be brought into contact and into thermal connection or not with the thermal shields of the refrigeration unit (20), the method comprising a plurality of movements of the cane (10) through the orifices so as to bring portions (12, 13) opposite thermalization members (32) and a plurality of actuations of the thermalization members (32) to bring the portions (12, 13) into thermal connection with the thermal shields.

21. The method according to claim 19 or 20, in which the refrigeration unit (20) also comprises:
- a first additional thermal shield (110) that defines a second thermal enclosure (111) extending around the first thermal enclosure (31), the second thermal enclosure (110) comprising a second orifice (135) for the passage of the cane (10) and a second thermalization member (132) which is arranged to selectively bring into thermal connection the first portion (12) and the first additional thermal shield (110);
- a second additional thermal shield (200) that defines a third thermal enclosure (201) extending around the second thermal enclosure (111), the third thermal enclosure (201) comprising a third orifice (235) for the passage of the cane (10) and a third thermalization member (232) which is arranged to selectively bring into thermal connection the first portion (10) and the second additional thermal shield (200);
- a third additional thermal shield (300) that defines a fourth thermal enclosure (301) extending around the third thermal enclosure (201), the fourth thermal enclosure (301) comprising a fourth orifice (335) for the passage of the cane (10),
the method comprising the additional steps of:
- moving the cane (10) through the fourth orifice (335) and the third orifice (235) so as to bring the first portion (12) opposite the third thermalization member (232),
- actuating the third thermalization member (232) to bring the first portion (12) into thermal connection with the second additional thermal shield (200),
- when a temperature of the first portion (12) is substantially equal to a temperature of the second additional thermal shield (200), actuating the third thermalization member (232) to suppress a thermal connection of the first portion (12) with the second additional thermal shield (200),
- moving the cane (10) into the second orifice (135) so as to bring the first portion (12) opposite the second thermalization member (132),
- actuating the second thermalization member (132) to bring the first portion (12) into thermal connection with the first additional thermal shield (110),
- when a temperature of the first portion (12) is substantially equal to a temperature of the first additional thermal shield (110), actuating the second thermalization member (132) to suppress a thermal connection of the first portion (12) with the first additional thermal shield (110).
